# EUROPÄISCHE PATENTSCHRIFT

(11) **EP 3 736 603 B1**
(45) Veröffentlichungstag und Bekanntmachung des Hinweises auf die Patenterteilung: **29.09.2021**
(21) Anmeldenummer: 19173831.9
(22) Anmeldetag: 10.05.2019
(51) Int. Cl.: G01S 7/481, G01S 17/86, G01S 17/02

(54) **OPTOELEKTRONISCHER SENSOR UND VERFAHREN ZUR ÜBERWACHUNG EINES ÜBERWACHUNGSBEREICHS**
OPTOELECTRONIC SENSOR AND METHOD FOR DETECTING A MONITORED AREA
CAPTEUR OPTOÉLECTRONIQUE ET PROCÉDÉ DE SURVEILLANCE D'UNE ZONE DE SURVEILLANCE

(43) Veröffentlichungstag der Anmeldung: 11.11.2020
(73) Patentinhaber: SICK AG, 79183 Waldkirch (DE)
(72) Erfinder: Nübling, Ralf Ulrich, 79211 Denzlingen (DE)

(56) Entgegenhaltungen:
- EP-A2- 2 863 176
- DE-U1-202013 104 715
- US-A- 4 277 156
- US-A1- 2019 101 623

## Beschreibung

Die Erfindung betrifft einen optoelektronischen Sensor und ein Verfahren zur Überwachung eines Überwachungsbereichs nach dem Oberbegriff von Anspruch 1 beziehungsweise 15.

Ein häufig eingesetzter optoelektronischer Sensor ist der Laserscanner. Sie werden für Messanwendungen, aber auch in der Sicherheitstechnik zur Überwachung einer Gefahrenquelle eingesetzt, wie in der DE 43 40 756 A1 beschrieben. Dabei wird ein Schutzfeld überwacht, das während des Betriebs der Maschine vom Bedienpersonal nicht betreten werden darf.

In einem Laserscanner überstreicht ein von einem Laser erzeugter Lichtstrahl mit Hilfe einer Ablenkeinheit, etwa einem drehenden Umlenkspiegel oder einem rotierenden Spiegelrad, periodisch eine Überwachungs- oder Abtastebene. Das Licht wird an Objekten in der Abtastebene remittiert und nach Empfang in dem Laserscanner ausgewertet. Objektpositionen oder Objektkonturen werden in zweidimensionalen Polarkoordinaten aus der Winkelstellung der Ablenkeinheit und der Lichtlaufzeit von Laserscanner zu Objekt bestimmt. Während die meisten bekannten Laserscanner mit einem einzigen Abtaststrahl arbeiten und dementsprechend nur eine zentrale Abtastebene erfassen, gibt es auch Bestrebungen, durch eine Vielzahl von Abtaststrahlen einen Mehrebenenscanner zu realisieren. Die dritte Raumkoordinate kann alternativ durch entsprechende Bewegung der Ablenkeinheit in Querrichtung berücksichtigt werden.

Gerade für den Fall, dass nicht nur eine einzige zentrale Abtastebene erfasst werden soll, wird im Stand der Technik vorgeschlagen, anstelle eines Drehspiegels den gesamten Messkopf mit Lichtsender und Lichtempfänger rotieren zu lassen. Ein solcher Laserscanner wird in der DE 197 57 849 B4 offenbart. In der EP 2 388 619 A1 ist ebenfalls eine drehbare Sende-/Empfangseinheit vorgesehen. Sie wird beispielsweise nach dem Transformationsprinzip von den drehfesten Bereichen mit Energie versorgt, während die Datenübertragung drahtlos per Funk oder auf optischem Wege erfolgt.

Bekannt sind weiterhin bewegte oder drehende Kamerasysteme, die zur Erfassung eines größeren Bildbereichs Bilder aus verschiedenen Positionen aufnehmen. Ein solches System ist aber relativ aufwändig und baugroß. Außerdem werden Einzelbilder aufgenommen und ein zusammenhängendes Panoramabild allenfalls nachträglich und extern anhand der Bildinformationen erzeugt. Das ist je nach Szenerie nicht besonders genau. Alternativ wird nicht die Kamera bewegt, sondern ein externer Spiegel, über den die Kamera die Szenerie beobachtet. Durch die Spiegelbewegung entstehen dann Bildrotationen und Verzerrungen, die nur aufwändig korrigierbar sind. Entsprechend komplex ist die zeitliche und örtliche Abstimmung von Spiegelbewegung und Bildaufnahme.

Es gibt ferner Bestrebungen, die Erfassungsprinzipien von Laserscanner und rotierende Kamera zu kombinieren. Vorzugsweise wird dazu eine schnelle Zeilenkamera verwendet, die ihre zweite Bilddimension über die Rotationsbewegung gewinnt. Die beiden unterschiedlichen technischen Verfahren stellen jedoch sehr unterschiedliche technische Herausforderungen. Die Lichtlaufzeitmessung eines Laserscanners arbeitet vom Nahbereich bis in den Fernbereich, eine abstandsabhängige Fokussierung entfällt vollständig. Dagegen müssen Kameras immer auf den Objektabstand fokussiert werden, besonders wenn es sich um hochauflösende Kameras handelt und große Abstandsbereiche abgedeckt werden sollen. Eine Anpassung der Fokuslage für eine Bildsensorzeile der Kamera wird jedoch angesichts der typischen Winkelgeschwindigkeiten eines Laserscanners nicht möglich sein.

Die DE 10 2004 014 041 A1 offenbart ein Sensorsystem zur Hinderniserkennung nach Art eines Laserscanners, das eine nach dem Laufzeitverfahren arbeitende Mehrkanalentfernungsmessung mit einer passiven Bildaufnahme kombiniert. Zur Entfernungsmessung wird jeweils eine Laserzeile und eine Reihe von Fotodioden verwendet, die bezüglich der Abtastebenen aufrecht stehen. Mehrere solche Entfernungsmesssysteme sind im Winkelabstand von 120° in Drehrichtung gegeneinander versetzt, deren Elevationswinkel durch einen Hubmotor variiert werden kann. So ist jedes Entfernungsmesssystem für einen gewissen, komplementären Elevationswinkelbereich zuständig. Das Empfangslicht wird zugleich über einem Teilerspiegel hinter derselben Empfangsoptik eines Entfernungsmesssystems auf eine Bildsensorzeile geleitet. Damit arbeitet auch der passive Bildaufnahmeteil mit einer fixen Fokussierung.

In der EP 2 863 176 A2 wird eine rotierende Plattform offenbart, auf der verschiedene Erfassungseinheiten rotieren können. In einer Ausführungsform sind eine erste Erfassungseinheit zur optischen Entfernungsmessung nach einem Lichtlaufzeitverfahren und eine zweite Erfassungseinheit zur Bildaufnahme mit einem pixelaufgelösten Bildsensor im 180°-Versatz miteinander kombiniert. Der von der ersten Erfassungseinheit gemessene Abstand zu einem Objekt kann unter Berücksichtigung des gegenseitigen Winkelversatzes der Erfassungseinheiten genutzt werden, um in der zweiten Erfassungseinheit den Fokus von deren Empfangsoptik zu verstellen und das Objekt scharf zu erfassen. Dabei bleibt aber ungeklärt, wie die Fokusverstellung dies in der geforderten Geschwindigkeit leistet, und jedenfalls wäre dafür einiger Aufwand zu betreiben.

Die US2019/0101623 A1 offenbart ein auf Triangulation basierendes Sicherheitsscansystem. Ein Bildsensor in Scheimpfluganordnung überwacht dabei eine Ebene parallel zum Boden auf eindringende Personen.

Aus der US 4 277 156 ist eine Fokuspositionserkennungsvorrichtung bekannt, bei dem ein photoelektrisches Wandlerelement drei Bereiche mit unterschiedlichen optischen oder physischen Abständen zu einem Objekt aufweist.

Es ist daher Aufgabe der Erfindung, die Bildaufnahme mit einem optoelektronischen Sensor der diskutierten Bauart zu verbessern.

Diese Aufgabe wird durch einen optoelektronischen Sensor und ein Verfahren zur Überwachung eines Überwachungsbereichs nach Anspruch 1 beziehungsweise 15 gelöst. In einer um eine Drehachse beweglichen Abtasteinheit, die insbesondere rotiert oder hin- und herschwenkt, ist ein Kameramodul mit einer Empfangsoptik und einem Bildsensor aus mindestens zwei Empfangszeilen von Empfangselementen oder Pixeln untergebracht. Die Empfangszeilen sind vorzugsweise parallel zur Drehachse ausgerichtet. Das ist der Grundaufbau eines Laserscanners mit um eine Drehachse beweglichem Messkopf. Das optische Messmodul ist jedoch eine Kamera anstelle eines Lichttasters mit Lichtlaufzeitmessung, wobei ein solches Lichtlaufzeitmodul eines typischen Laserscanners in bevorzugten Ausführungsformen hinzukommen wird. Eine Steuerund Auswertungseinheit koordiniert die Abläufe im Sensor und liest Bilddaten zumindest eines Teils der Lichtempfangselemente aus.

Die Erfindung geht von dem Grundgedanken aus, auf passive Weise für eine Fokussierung zu sorgen beziehungsweise scharfe Bilddaten zu gewinnen. Dazu wird der Bildsensor in Richtung der optischen Achse des Kameramoduls beziehungsweise von dessen Empfangsoptik optisch schräg gestellt. Dabei bedeutet optisch schräg gestellt, dass die Konfiguration sich so verhält wie mit einem schräg stehenden Bildsensor, wobei es auf den optischen Effekt ankommt und nicht auf die Geometrie. Im weiteren Verlauf der Beschreibung werden dafür verschiedene Ausführungsformen angegeben. Herkömmlich steht ein Bildsensor senkrecht zur optischen Achse, erfindungsgemäß verhält sich das Kameramodul, als sei der Bildsensor aus dieser Ebene herausgedreht, bevorzugt um eine Achse parallel zur Drehachse.

Damit ist die effektive optische Weglänge zwischen Empfangsoptik und Bildsensor für zumindest einige und vorzugsweise alle Empfangszeilen einzeln oder gruppenweise unterschiedlich. Jede dieser Empfangszeilen mit unterschiedlicher optischer Weglänge hat einen anderen Tiefenschärfenbereich, insbesondere eine Empfangszeile im Nahbereich und eine Empfangszeile im Fernbereich mit der Möglichkeit einer feineren Staffelung durch weitere Tiefenschärfenbereiche zwischen Nahbereich und Fernbereich. So entstehen mehrere Zeilenkameras mit komplementären, einander ergänzenden Tiefenschärfenbereichen, vorzugsweise so, dass alle interessierenden Entfernungsbereiche in zumindest einen der Tiefenschärfenbereiche fallen.

Die Erfindung hat den Vorteil, dass das in die bewegte oder rotierende Abtasteinheit integrierte Kameramodul keine dynamische Fokusanpassung benötigt und trotzdem qualitativ hochwertige Bilder aufnimmt. Es sind keine beweglichen Teile einer Fokusverstellung zu deren dynamischem Nachführen erforderlich. Das senkt die Herstellkosten und verlängert die Lebensdauer. Die Datenmenge kann durch selektive Auswahl der auszulesenden Bilddaten und Empfangszeilen stark reduziert werden. Da nichts bewegt werden muss und nur handhabbare Datenmengen zu verarbeiten sind, ist eine sehr schnelle Auswertung und hohe Taktfrequenz der Empfangszeilen realisierbar.

In der Abtasteinheit ist bevorzugt mindestens ein Lichtlaufzeitmodul angeordnet, das einen Lichtsender zum Aussenden von Sendelicht und einen Lichtempfänger zum Empfangen des von Objekten in dem Überwachungsbereich remittiertem Sendelichts aufweist, wobei eine Lichtlaufzeitmesseinheit die Lichtlaufzeit zwischen Aussenden des Sendelichts und Empfangen des remittierten Sendelichts bestimmt. Damit wird die Bilderfassung des Kameramoduls mit dem üblichen Messprinzip eines Laserscanners kombiniert. Zur Lichtlaufzeitmessung kann jedes an sich bekannte Verfahren verwendet werden, einschließlich Pulsverfahren, Pulsmittelungsverfahren und Phasenverfahren. Die Lichtlaufzeitmesseinheit ist je nach Ausführungsform schon in dem Lichtlaufzeitmodul selbst, zentral in der Steuer- und Auswertungseinheit oder verteilt implementiert, etwa indem das Lichtlaufzeitmodul bereits Time-to-Digital-Convertert für eine rohe Laufzeiterfassung aufweist, die dann in der Steuer- und Auswertungseinheit weiterverarbeitet werden. Durch die Kombination stehen verbesserte, erweiterte Messdaten zur Verfügung. Das Lichtlaufzeitmodul erzeugt Abstandsprofile beispielsweise in Form einer Punktewolke. Das Kameramodul ergänzt vorzugsweise hochaufgelöste Bilddaten mit Helligkeits- oder Farbinformationen.

Das Lichtlaufzeitmodul ist bevorzugt mehrstrahlig ausgebildet, indem das Sendelicht mehrere voneinander separierte Abtaststrahlen bildet und/oder der Lichtempfänger das remittierte Sendelicht als mehrere voneinander separierte Abtaststrahlen empfängt. Dadurch entsteht ein Mehrebenenscanner. Die mehreren Abtaststrahlen werden sendeseitig und/oder empfangsseitig erzeugt. Abtaststrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen.

Der Lichtsender weist bevorzugt eine Vielzahl von Einzellichtsendern, die jeweils einzeln oder gruppenweise einen Abtaststrahl erzeugen, und/oder der Lichtempfänger eine Vielzahl von Einzellichtempfängern auf, die jeweils einzeln oder gruppenweise das remittierte Sendelicht als einen Abtaststrahl empfangen. Es gibt dann jeweilige Paare von Einzellichtsendern und Einzellichtempfängern, die einen Abtaststrahl erzeugen. Alternativ ist denkbar, sendeseitig oder empfangsseitig ein Flächenelement zu verwenden, die Separation der Abtaststrahlen geschieht dann auf der Gegenseite. Ein Beispiel ist eine sendeseitige Lichtlinie, von der unterschiedliche Abschnitte separat empfangen werden, um die Abtaststrahlen zu bilden, oder die Aufspaltung von Sendelicht in einem diffraktiven optischen Element. Ein anderes Beispiel ist ein einzelnes, langgestrecktes Empfangselement, auf das separate Abtaststrahlen mehrere Einzellichtsender fallen. In solchen Fällen ist eine Unterscheidung durch Zeitmultiplexing, Wellenlängen oder Strahlcodierung vorteilhaft.

Die Steuer- und Auswertungseinheit ist bevorzugt dafür ausgebildet, Bilddaten des Kameramoduls und Abstandsdaten des Lichtlaufzeitmoduls zu fusionieren. Dazu werden die Abstandsprofile und Bilddaten einander zugeordnet. Das geht vergleichsweise einfach, da eine aufwändige Kalibrierung beziehungsweise Registrierung aufgrund der Anordnung und Bewegung im selben Sensor nicht erforderlich ist. Eine einfache Fusion bringt die Abstandsprofile und Bilddaten lediglich in eine gemeinsame Struktur bei passenden gemeinsamen Koordinaten. Es ist aber auch denkbar, ein echtes 3D-Bild aus den Abstandsprofilen mit Texturinformation aus den Bildaufnahmen zu erzeugen. Ein Teil der Fusion besteht vorzugsweise darin, die im Laufe der Bewegung der Abtasteinheit gewonnenen Daten aneinanderzureihen, und auch das ist bei bekannter Drehbewegung ohne aufwändige Stitchingverfahren möglich.

Die Steuer- und Auswertungseinheit ist bevorzugt dafür ausgebildet, anhand von Abstandsdaten des Lichtlaufzeitmoduls eine Empfangszeile auszuwählen, deren Bilddaten ausgelesen werden. Durch die Lichtlaufzeitmessung ist unter Berücksichtigung der gegenseitigen Anordnung von Lichtlaufzeitmodul und Kameramodul in der Abtasteinheit bekannt, bei welchem Abstand ein Objekt jeweils mit dem Bildsensor aufgenommen wird. Dementsprechend wählt die Steuer- und Auswertungseinheit diejenige Empfangszeile aus, deren Tiefenschärfenbereich am besten zum jeweiligen Objektabstand passt. Eine rechenintensive Auswertung der Bildschärfe zur Ermittlung der jeweils für das auszugebende Bild verwendeten Bereiche kann entfallen, auch wenn das denkbar bleibt.

Die Steuer- und Auswertungseinheit ist bevorzugt dafür ausgebildet, eine Zeile von Bilddaten abschnittsweise aus jeweils einer von mehreren Empfangszeilen auszulesen. Hier wird weitergehend nicht jeweils eine ganze Bildzeile aus derselben Empfangszeile ausgelesen, sondern die Bildzeile wird aus den schärfsten Teilbereichen verschiedener Empfangszeilen zusammengesetzt. Das ist vorteilhaft bei Erfassung von Kanten mit annähernd horizontaler Ausrichtung, oder anschaulich einer Anordnung zweier Objekte übereinander mit stark unterschiedlichem Objektabstand. Beispielsweise liefert eine Empfangszeile mit Tiefenschärfenbereich im Nahbereich den oberen Teil der Bildzeile für ein nahes oberes Objekt und eine andere Empfangszeile mit Tiefenschärfenbereich im Fernbereich den unteren Teil der Bildzeile für ein fernes unteres Objekt.

Die Steuer- und Auswertungseinheit ist bevorzugt dafür ausgebildet, die jeweilige Empfangszeile, aus der ein Abschnitt der Zeile von Bilddaten ausgelesen wird, anhand von Abstandsdaten mindestens eines zugeordneten Abtaststrahls auszuwählen. Das soeben erläuterte Zusammensetzen einer Bildzeile aus mehreren Empfangszeilen kann ganz gezielt erfolgen, wenn das Lichtlaufzeitmodul mehstrahlig ist. Dann sind nämlich Objektabstände sogar für die jeweiligen Abschnitte der Empfangszeilen gemessen. Die Abtaststrahlen werden den passenden Abschnitten zugeordnet. Dabei ist sowohl eine Unterteilung der Empfangszeilen in eine Anzahl entsprechend der Abtaststrahlen als auch eine gezielte Abweichung davon vorstellbar, indem es beispielsweise weniger Abschnitte als Abtaststrahlen gibt und über Abtaststrahlen gemittelt oder ein für seinen Abschnitt repräsentativer Abtaststrahl ausgewählt wird.

Die Steuer- und Auswertungseinheit ist bevorzugt dafür ausgebildet, eine Zeile schärfster Bilddaten durch Bildverarbeitung zu bestimmen, insbesondere durch Kontrastbewertung. Wenn mittels Lichtlaufzeitmodul ein Objektabstand gemessen wurde, ist es nicht mehr erforderlich, die Bildschärfe zu bewerten, weil der Objektabstand angibt, welcher Tiefenschärfenbereich verwendet und damit welche Empfangszeile ausgelesen wird. In Ergänzung, oder in Ausführungsformen ohne Lichtlaufzeitmodul, ist aber auch eine nachgelagerte Auswahl einer Bildverarbeitung aufgrund der tatsächlichen Bildschärfe beziehungsweise des besten Kontrastes möglich. Die Bildschärfe kann auch abschnittsweise bewertet werden, um schärfste Abschnitte verschiedener Empfangszeilen zu einer Bildzeile zusammenzusetzen.

Der Bildsensor weist bevorzugt eine Matrixanordnung von Lichtempfangselementen auf, und die Empfangszeilen sind Teilbereiche der Matrixanordnung. Ein matrixförmiger Bildsensor vereinfacht den Aufbau. Es ist denkbar, für mehr Abstand zwischen den Zeilen zu sorgen, indem nur zueinander beabstandete Zeilen der Matrix als Empfangszeilen genutzt werden. Auch können mehrere Pixelzeilen zu einer Empfangszeile zusammengefasst werden. Alternativ zu einem matrixförmigen Bildsensor können mehrere diskrete zeilenförmige Bildsensoren eingesetzt werden.

Der Bildsensor ist vorzugsweise physisch schräggestellt. Oben wurde betont, dass ein optisch schräg stehender Bildsensor nicht notwendig geometrisch schräg steht. In dieser Ausführungsform ist das aber der Fall. Dadurch werden keine zusätzlichen Bauteile benötigt, um die unterschiedlichen optischen Weglängen zu den Empfangszeilen zu realisieren. Besonders vorteilhaft ist ein Schrägstellen in Scheimpfluganordnung. Dabei schneiden sich Bild-, Objektiv- und Schärfenebene in einer Gerade. In der Scheimpfluganordnung werden zweidimensionale Bilder bei gekippter Objektebene vollflächig scharf abgebildet. Erfindungsgemäß wird damit die Anforderung erfüllt, mit den Empfangszeilen gemeinsam einen vergrößerten Tiefenschärfenbereich abzudecken.

Dem Bildsensor ist bevorzugt ein optisches Element vorgeordnet, das für dessen effektives optisches Schrägstehen sorgt. Das optische Element bewirkt also unterschiedliche optische Weglängen von der Empfangsoptik zu den jeweiligen Empfangszeilen. Dadurch besteht die Möglichkeit, dass der Bildsensor physisch oder geometrisch in der herkömmlichen Orientierung in der Ebene senkrecht zur optischen Achse des Kameramoduls bleibt. Allerdings ist auch vorstellbar, den Bildsensor sowohl physisch schräg zu stellen als auch ein optisches Element vorzuordnen, womit sich dann die Effekte auf die optischen Weglängen kombinieren.

Das optische Element ist bevorzugt als Stufenelement und/oder mit streifenförmigen Bereichen unterschiedlicher Brechungsindices ausgebildet. Ein Stufenelement ist eine Art Treppe mit optisch transparenten Stufen unterschiedlicher Dicke. Dadurch bewegt sich das Empfangslicht durch eine unterschiedlich dicke Schicht zu den verschiedenen Empfangszeilen, mit entsprechend unterschiedlichem Einfluss auf die optische Weglänge. Der gleiche Effekt lässt sich durch Streifen transparenten Materials mit unterschiedlichen Brechungsindices erzielen, und beides ist auch durch Stufen unterschiedlicher Brechungsindices kombinierbar. Ein physisch schräg stehender Bildsensor hat aufgrund der Geometrie eine lineare Beziehung zwischen lateraler Anordnung der Empfangszeile und durch das Schrägstehen verändertem Abstand zur Empfangsoptik. Das ist mit einem entsprechend regelmäßigen optischen Element auch möglich, es kann aber bei Bedarf durch unregelmäßige Stufen oder nichtlineare Sprünge der Brechungsindices davon abgewichen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung durch einen optoelektronischen Sensor mit um eine Drehachse beweglicher Abtasteinheit;
- Fig. 2: eine Draufsicht auf die bewegliche Abtasteinheit in einer Ausführungsform mit zwei Lichtlaufzeitmodulen und einem Kameramodul;
- Fig. 3: eine Draufsicht auf die bewegliche Abtasteinheit in einer Ausführungsform mit einem mehrstrahligen Lichtlaufzeitmodul und einem Kameramodul;
- Fig. 4: eine schematische Schnittansicht des mehrstrahligen Lichtlaufzeitmoduls gemäß Figur 3;
- Fig. 5: eine Darstellung der Empfangszeilen eines Bildsensors eines Kameramo-duls mit Zuordnung von Abtaststrahlen eines mehrstrahligen Lichtlaufzeit-moduls zu Abschnitten der Empfangszeilen;
- Fig. 6: eine vereinfachte Darstellung eines Kameramoduls mit optischem Element in Form eines Stufenelements; und
- Fig. 7: eine vereinfachte Darstellung eines Kameramoduls mit optischem Element mit mehreren streifenförmigen Bereichen unterschiedlicher Brechungsin-dices.

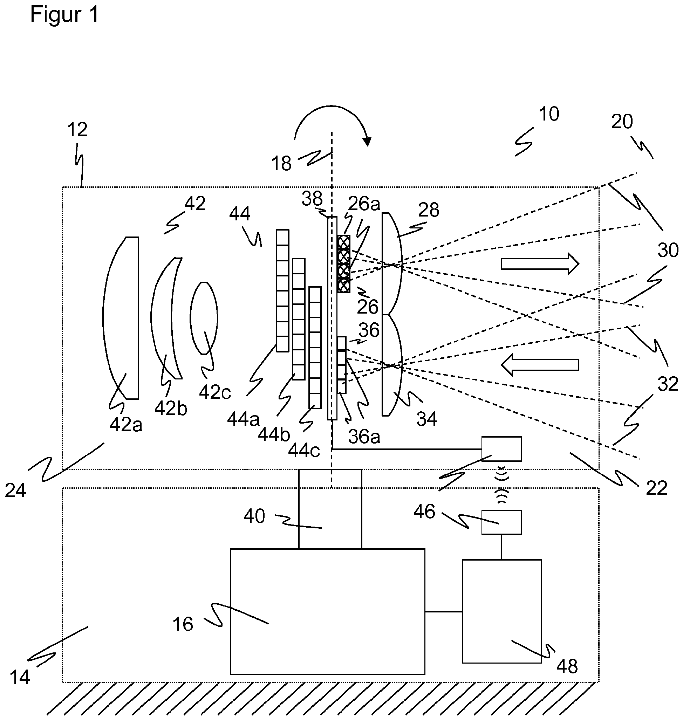

Figur 1 zeigt eine schematische Schnittdarstellung durch einen optoelektronischen Sensor 10, der in grober Aufteilung eine bewegliche Abtasteinheit 12 und eine Sockeleinheit 14 umfasst. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Bewegung um eine Drehachse 18 versetzt, um so einen Überwachungsbereich 20 periodisch abzutasten.

In der Abtasteinheit 12 sind Erfassungsmodule untergebracht, nämlich in der Ausführungsform nach Figur 1 ein Lichtlaufzeitmodul 22 zur Bestimmung von Objektabständen beziehungsweise Scandaten oder Abstandsprofilen und ein Kameramodul 24 zur Erfassung von Bilddaten.

In dem Lichtlaufzeitmodul 22 erzeugt ein Lichtsender 26 mit mehreren Lichtquellen 26a, beispielsweise LEDs oder Laser in Form von Kantenemittern oder VCSELs, mit Hilfe einer Sendeoptik 28 mehrere Sendelichtstrahlen 30, die in den Überwachungsbereich 20 ausgesandt werden. Im dargestellten Beispiel sind es vier Sendelichtstrahlen 30 für vier Abtastebenen, es können mehr, auch deutlich mehr, und ebenso weniger Sendelichtstrahlen 30 bis hin zu nur einem Einzelstrahl sein.

Anstelle einer gemeinsamen Sendeoptik 28 sind Einzeloptiken möglich. Die mehreren Sendelichtstrahlen 30 können auch dadurch entstehen, dass das Licht einer Lichtquelle oder einiger Lichtquellen durch ein Strahlteilerelement, ein diffraktives optisches Element oder dergleichen aufgeteilt wird. In einer weiteren Ausführungsform wird flächig oder mit einer Lichtlinie beleuchtet, und das Sendelicht wird erst empfangsseitig in Abtaststrahlen unterteilt.

Treffen die Sendelichtstrahlen 30 in dem Überwachungsbereich 20 auf ein Objekt, so kehren entsprechende remittierte Lichtstrahlen 32 zu dem Sensor 10 zurück. Die remittierten Lichtstrahlen 32 werden von einer gemeinsamen Empfangslinse 34 auf einen Lichtempfänger 36 mit mehreren Einzellichtempfangselementen 36a geführt, die jeweils ein elektrisches Empfangssignal erzeugen. Die Einzellichtempfangselemente 36a können separate Bauteile oder Pixel einer integrierten Anordnung sein, beispielsweise Photodioden, APDs (Avalanche Diode) oder SPADs (Single-Photon Avalanche Diode). Die Bemerkungen zur Sendeseite gelten sinngemäß auch hier. Es können also mehrere empfangsseitige Linsen oder sonstige optischen Elemente zur Strahlführung auf die Einzellichtempfangselemente 36a vorgesehen sein, und mehrere Abtaststrahlen können auf einem gemeinsamen Lichtempfangselement erfasst werden.

Lichtsender 26 und Lichtempfänger 36 sind in dieser Ausführungsform gemeinsam auf einer Leiterkarte 38 angeordnet, die auf der Drehachse 18 liegt und mit der Welle 40 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 26 und Lichtempfänger 36 ist nicht zwingend und durch jede an sich von optoelektronischen Lichttastern oder Laserscannern bekannte Bauform ersetzbar. Ein Beispiel dafür ist eine koaxiale Anordnung mit oder ohne Strahlteiler.

Das Kameramodul 24 andererseits weist eine Empfangsoptik 42 mit hier rein beispielhaft drei Linsen 42a-c und einen Bildsensor 44 mit mehreren Empfangszeilen 44a-c auf. Dargestellt sind drei Empfangszeilen 44a-c, in anderen Ausführungsformen weicht die Anzahl ab, es sind jedoch mindestens zwei Empfangszeilen 44a-c. Die Empfangszeilen 44a-c sind vorzugsweise hochauflösend mit einer Anzahl von hunderten, tausenden oder noch mehr Pixel in Zeilenrichtung, und sie sind parallel zur Drehachse 18 ausgerichtet. Anstelle diskreter Empfangszeilen kann der Bildsensor 44 eine Matrixanordnung von Pixeln aufweisen, und die Empfangszeilen 44a-c sind dessen Zeilen oder ausgewählte seiner Zeilen.

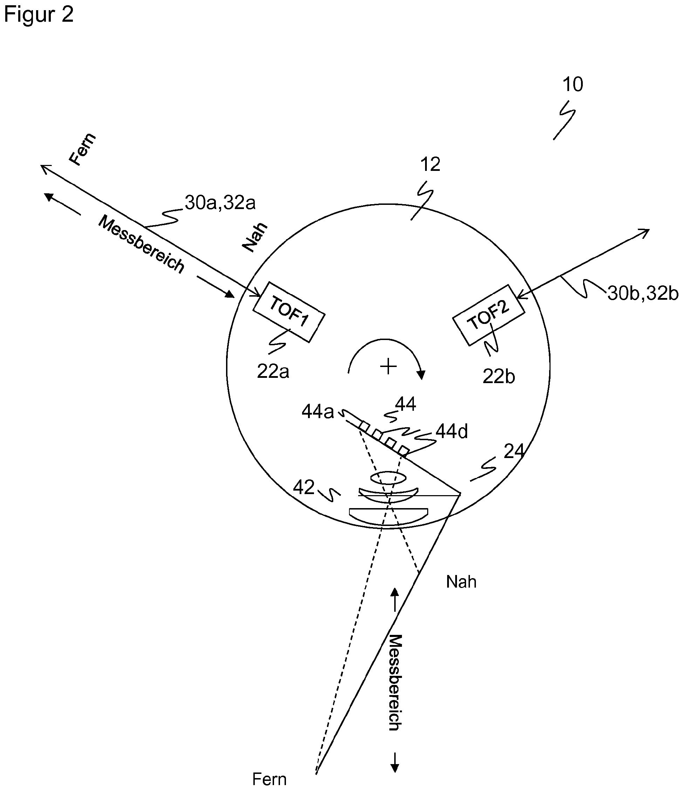

Weiterhin sind die Empfangszeilen 44a-c in Richtung der optischen Achse des Kameramoduls 24, d. h. in Figur 1 von links nach rechts, gegeneinander versetzt angeordnet. Der Bildsensor 44 steht folglich in Richtung der optischen Achse schräg. Der dadurch erzielte Effekt sowie Alternativen, um ihn zu erreichen, werden später unter Bezugnahme auf die Figuren 2 bis 7 näher erläutert. Der Bildsensor 44 kann mit derselben Leiterkarte 38 verbunden sein, auf dem Lichtsender 26 und Lichtempfänger 36 des Lichtlaufzeitmoduls 22 untergebracht sind, oder das Kameramodul 24 weist eine oder mehrere eigene Leiterkarten auf. In einigen Ausführungsformen weist das Kameramodul 24 eine eigene Beleuchtung auf, um den jeweils aufgenommenen Abschnitt des Überwachungsbereichs 20 ausreichend zu beleuchten.

Eine berührungslose Versorgungs- und Datenschnittstelle 46 verbindet die bewegliche Abtasteinheit 12 mit der ruhenden Sockeleinheit 14. Dort befindet sich eine Steuer- und Auswertungseinheit 48, die zumindest teilweise auch auf der Leiterkarte 38 oder an anderem Ort in der Abtasteinheit 12 vorgesehen sein kann. Vorstellbar ist weiterhin, zumindest einen Teil der Auswertung schon im Lichtempfänger 36 beziehungsweise im Bildsensor 44 unterzubringen, etwa durch eine ASIC-Bauweise (Application-Specific Integrated Circuit). Im Folgenden werden alle diese Varianten nicht mehr unterschieden, sondern es wird die Steuer- und Auswertungsfunktionalität als solche beschrieben.

Um mit dem Lichtlaufzeitmodul 22 Objektabstände zu messen, wird der Lichtsender 26 moduliert und die Lichtlaufzeit bis zum Empfang von remittierten Lichtstrahlen 32 im Lichtempfänger 36 gemessen. Die Modulation ist je nach Lichtlaufzeitverfahren gewählt, also beispielsweise für ein Pulsverfahren, Pulsmittelungsverfahren, Phasenverfahren oder Korrelationsverfahren.

Zusammen mit einer Information über die Winkelstellung von einer nicht dargestellten Winkelmesseinheit, welche die jeweilige Winkelstellung der Abtasteinheit 12 bestimmt, stehen nach jeder Abtastperiode mit Winkel und Entfernung zweidimensionale Polarkoordinaten aller Objektpunkte in einer Abtastebene zur Verfügung. Die jeweilige Abtastebene, sofern es mehrere Abtastebenen gibt, ist über die Identität des jeweiligen Abtaststrahls 30, 32 ebenfalls bekannt, so dass insgesamt ein dreidimensionaler Raumbereich abgetastet wird. Es sei noch angemerkt, dass nur bei einem in Figur 1 nicht vorhandenen horizontalen Sendelichtstrahl eine echte Abtastebene erfasst wird. Ansonsten wird genaugenommen eine Mantelfläche eines Kegels abgetastet, aber auch dies wird vereinfachend als Abtastebene bezeichnet.

Der Bildsensor 44 des Kameramoduls 24 andererseits stellt durch seine mehreren Empfangszeilen 44a-c die Bildinformation zunächst mehrfach redundant bereit. Daraus wird eine jeweilige Bildzeile erzeugt, die scharf aufgenommen ist. Im Laufe der Bewegung der Abtasteinheit 12 wird der Überwachungsbereich 20 überstrichen, und die aufgenommenen scharfen Bildzeilen werden zu einem zweidimensionalen Bild aneinandergereiht. Je nach Anwendung werden die Abstandsdaten des Lichtlaufzeitmoduls 22 und die Bilddaten des Kameramoduls 24 fusioniert.

Figur 2 zeigt eine Draufsicht auf die Abtasteinheit 12 einer weiteren Ausführungsform des Sensors 10. In diesem Beispiel sind zwei Lichtlaufzeitmodule 22a-b mit jeweils einem oder mehreren Abtaststrahlen 30a-b, 32a-b sowie ein Kameramodul 24 in einem gegenseitigen Winkelversatz von etwa 120° vorgesehen. In anderen Ausführungsformen gibt es mehr oder weniger Lichtlaufzeitmodule 22, einschließlich eines Sensors 10, der überhaupt nur ein Kameramodul 24 aufweist, oder zusätzliche Kameramodule. Auch die Anordnung einschließlich der gegenseitigen Winkelabstände ist rein beispielhaft zu verstehen. Es können zusätzliche optische oder nicht optische Module in der Abtasteinheit 12 angeordnet sein, wie beispielsweise ein Inertialsensor (IMU, Inertial Measurement Unit).

In dem Kameramodul 24 ist in der Draufsicht noch deutlicher als in Figur 1 zu erkennen, dass der Bildsensor 44 schräg steht. Üblicherweise liegt der Bildsensor 44 in einer Ebene senkrecht zur optischen Achse der Empfangsoptik 42. Diese optische Achse ist in Figur 2 vertikal nach unten gerichtet, so dass der Bildsensor 44 herkömmlich in einer horizontalen Ebene senkrecht zur Papierebene liegen würde. Stattdessen ist aber der Bildsensor 44 aus dieser horizontalen Ebene herausgedreht. Die Empfangszeilen 44a-d, hier als weitere Zahlenbeispiel vier Empfangszeilen 44a-d, habe daher einen vertikalen Versatz zueinander. Dadurch werden die optischen Wege von der Empfangsoptik 42 zur der jeweiligen Empfangszeile 44a-d unterschiedlich lang. Die in Rotationsrichtung erste Empfangszeile 44a wird deshalb auf den Nahbereich fokussiert und die letzte Empfangszeile 44d auf den Fernbereich, mit entsprechenden Zwischenbereichen der übrigen Empfangszeilen 44b-c.

Besonders vorteilhaft ist eine Schrägstellung des Bildsensors 44, in der die Scheimpflugbedingung erfüllt ist. Dabei schneiden sich die in Figur 2 auch gezeigten Bild-, Objektiv- und Schärfenebenen in einer Geraden. Das Schrägstellen der Empfangsebene des Bildsensors 44 in einer Scheimpfluganordnung ermöglicht, zweidimensionale Bilder bei einer gekippten Objektebene vollflächig scharf abzubilden. Das ist erfindungsgemäß nicht das Ziel, aber die Scheimpflugbedingung stellt sicher, dass die Empfangszeilen 44a-d jeweils einen unterschiedlichen Tiefenschärfenbereich aufweisen und diese Tiefenschärfenbereiche einander komplementär ergänzen.

Die Empfangszeilen 44a-d nehmen nun simultan Bilddaten mit unterschiedlicher Fokussierung auf. Um jeweils scharfe Bilddaten auszuwählen, wird für jede Aufnahme oder zumindest gewisse Zeitintervalle diejenige Empfangszeile 44a-d selektiert, deren Tiefenschärfenbereich am besten zu dem tatsächlichen Objektabstand passt. Die Bilddaten der übrigen Empfangszeilen 44a-d bleiben unberücksichtigt und werden vorzugsweise gar nicht erst ausgelesen, um den Datenstrom zu begrenzen.

Dabei wird der Objektabstand von dem ersten Lichtlaufzeitmodul 22a und/oder dem zweiten Lichtlaufzeitmodul 22b gemessen. Die jeweilige Winkelstellung ist von der zu Figur 1 schon erwähnten Winkelmesseinheit bekannt, beispielsweise einer Codescheibe. Damit und anhand weiterer Parameter des Sensors 10, wie Winkelabstand zwischen den Modulen 22a-b, 24, Winkelgeschwindigkeit der Abtasteinheit, Aufnahmefrequenz und Auslesegeschwindigkeit des Bildsensors 44, ist die geometrische Zuordnung möglich. Der Objektabstand wird also schon entsprechend einem gewissen Bruchteil einer Umdrehung der Abtasteinheit 12 vorher gemessen, im Beispiel der Figur 2 sind es 120° oder 240°, und dann richtig zugeordnet. Dieselbe Zuordnung zwischen dem Messfeld eines Lichtlaufzeitmoduls 22a-b und dem Kameraausschnitt des Kameramoduls 24 kann auch für deren Datenfusion genutzt werden. Es sei nochmals wiederholt, dass das Lichtlaufzeitmodul 22a-b für sein Lichtlaufzeitverfahren keine unterschiedliche Fokussierung für seinen Arbeitsbereich von nah bis fern benötigt.

Es ist nicht zwingend erforderlich, die Auswahl der jeweils bestfokussierten Empfangszeile 44a-d anhand von Messdaten eines Lichtlaufzeitmoduls 22a-b vorzunehmen, zumal in einigen Ausführungsformen gar kein Lichtlaufzeitmodul 22 vorgesehen ist. Stattdessen werden dann die Bilddaten der Empfangszeilen 44a-b mittels Bildverarbeitung bewertet, etwa durch ein Kontrastmaß, die geeignetsten Bilddaten ausgewählt und zum Bildaufbau weiterverwendet. Das hat aber den Nachteil, dass doch alle Bilddaten ausgelesen und verarbeitet werden müssen, wodurch sich der Aufwand erheblich erhöht. Es sind auch Mischformen vorstellbar, in denen beispielsweise Bildzeilen anhand der Objektabstände vorselektiert oder favorisiert, dann aber zusätzlich auch in einer Bildverarbeitung bewertet und endgültig ausgewählt werden.

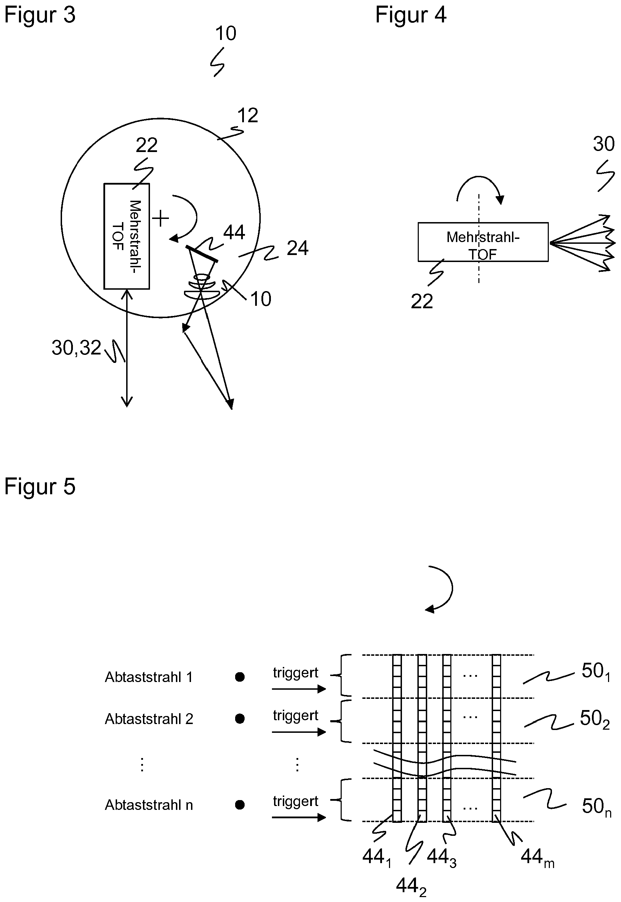

Figur 3 zeigt eine Draufsicht auf die Ablenkeinheit 12 in einer weiteren Ausführungsform des Sensors 10. Dabei sind jeweils ein Lichtlaufzeitmodul 22 und ein Kameramodul 24 vorgesehen, die nun beide mit lateralem Versatz in dieselbe Richtung ausgerichtet sind. Damit soll nur nochmals die Variantenvielfalt in Anzahl und Anordnung der Module 22, 24 unterstrichen werden. Außerdem ist das Lichtlaufzeitmodul 22 nun mehrstrahlig, wie nochmals in Figur 4 illustriert und zu Figur 1 auch bereits erläutert.

Mehrere Abtaststrahlen 30, 32 können auch dadurch erzeugt werden, dass mehrere einstrahlige Lichtlaufzeitmodule 22 mit gegenseitigem Versatz im Elevationswinkel eingesetzt werden. Nach demselben Prinzip können mehrstrahlige Lichtlaufzeitmodule 22 gemeinsam eine höhere Anzahl von Abtaststrahlen 30, 32 erzeugen.

Bisher wurde jeweils pro Aufnahme und damit Winkelstellung der Abtasteinheit 12 eine Empfangszeile 44a-d ausgewählt, deren Bilddaten ausgelesen und als schärfste Bildzeile weiterverwendet wird. Figur 5 illustriert, wie in einer vorteilhaften weiteren Ausführungsform mit den zusätzlichen Abstandsinformationen eines mehrstrahligen Lichtlaufzeitmoduls 22 scharfe Bilddaten von mehreren Empfangszeilen 44₁..44ₘ abschnittsweise zu einer Bildzeile zusammengesetzt werden.

Dazu werden die Empfangszeilen 44₁..44ₘ in Abschnitte 50₁..50ₙ unterteilt, und Abschnitte 50₁..50ₙ und Abtaststrahlen werden einander zugeordnet. Es wird also der mit dem obersten Abtaststrahl gemessene Objektabstand verwendet, um für den obersten Abschnitt 50₁ die Empfangszeile 44₁..44ₘ mit dem am besten zu dem Objektabstand passenden Tiefenschärfenbereich auszuwählen, entsprechend für die weiteren Abtaststrahlen bis zum untersten Abtaststrahl, der die Auswahl für den untersten Abschnitt 50ₘ bestimmt. Damit resultiert eine scharfe Bildzeile auch für den Fall, dass die Objektabstände über die Zeilenrichtung der Empfangszeilen 44₁..44ₘ stark variieren, wie im Falle einer horizontalen Kante oder einem nahen Objekt über einem fernen Objekt. Trotzdem bleiben die Auslesezeiten kurz, und es wird nur eine minimale Datenmenge ausgelesen, da die meisten Abschnitte 50₁..50ₙ der meisten Empfangszeilen 44₁..44ₘ wegen nicht passendem Objektabstand beziehungsweise Tiefenschärfenbereich unberücksichtigt bleiben können.

In Figur 5 gibt es eine 1:1-Zuordnung zwischen Abtaststrahlen und Abschnitten 50₁..50ₙ. Das muss nicht so sein, insbesondere kann es weniger Abschnitte geben, für die dann beispielsweise ein gemittelter Objektabstand herangezogen wird oder denen nur einer von mehreren an sich im Elevationswinkel passenden Abtaststrahlen repräsentativ zugeordnet wird. Weiterhin ist möglich, alternativ oder ergänzend zu einer Auswahl aufgrund von mit mehreren Abtaststrahlen gemessenen Objektabständen die Bildqualität nachgelagert in einer Bildauswertung zu bewerten und auf dieser Grundlage Bildzeilen aus den Bilddaten mehrerer Empfangszeilen 44₁..44ₘ abschnittsweise zusammenzusetzen. Damit geht aber der Vorteil verloren, nur einen Teil der Bilddaten auszulesen.

In den bisherigen Ausführungsformen steht der Bildsensor 44 schräg. So werden in Figur 2 und 3 die unterschiedlichen Tiefenschärfenbereiche der Empfangszeilen 44a-d durch die geometrische oder physische Anordnung des Bildsensors 44 erreicht. Es ist aber ebenso denkbar, einen optischen Effekt zu erzielen, der einem schräg stehenden Bildsensor 44 entspricht.

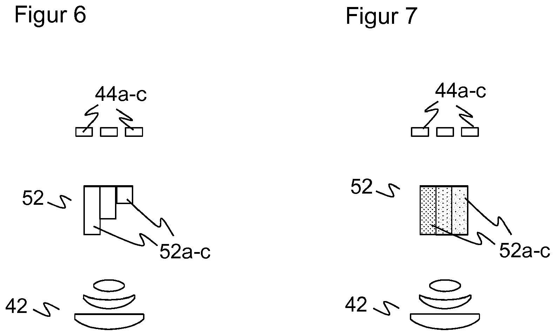

Die Figuren 6 und 7 zeigen zwei Beispiele eines optischen Elements 52, das zu diesem Zweck zwischen der Empfangsoptik 42 und dem Bildsensor 44 angeordnet wird. In Figur 6 ist das optische Element 52 ein Stufenelement mit mehreren transparenten Stufen 52a-c. In Figur 7 weist das optische Element 52 mehrere Bereiche 52a-c mit Brechungsindexsprüngen dazwischen auf. Beides ist miteinander kombinierbar. Dadurch werden jeweils wegen der unterschiedlichen Ausbreitungsgeschwindigkeiten im optischen Element 52 Wegunterschiede für das Empfangslicht aus Nahbereich und Fernbereich erzeugt, vergleichbar mit den physischen Wegunterschieden bei schräg stehendem Bildsensor 44. Es ist möglich, sowohl ein optisches Element 52 vorzusehen als auch den Bildsensor 44 schräg zu stellen.

## Patentansprüche

1. Optoelektronischer Sensor (10) zur Überwachung eines Überwachungsbereichs (20), der eine Abtasteinheit (12), ein in der Abtasteinheit (12) angeordnetes Kameramodul (24) mit einer Empfangsoptik (42) und einem Bildsensor (44) mit mindestens zwei Empfangszeilen (44a-c) von Lichtempfangselementen sowie eine Steuer- und Auswertungseinheit (48) zum Auslesen von Bilddaten des Bildsensors (44) aufweist, wobei der Bildsensor (44) in Richtung der optischen Achse des Kameramoduls (24) optisch schräg gestellt ist, so dass sich die optischen Weglängen von der Empfangsoptik (42) zu den jeweiligen Empfangszeilen (44a-c) unterscheiden,
**dadurch gekennzeichnet,**
**dass** die Abtasteinheit zur periodischen Abtastung des Überwachungsbereichs (20) um eine Drehachse (18) beweglich ist und dass die Steuer- und Auswertungseinheit (48) dafür ausgebildet ist, anhand von Abstandsdaten eines Lichtlaufzeitmoduls (22) eine Empfangszeile (44a-c) auszuwählen, deren Bilddaten ausgelesen werden, und/oder eine Zeile schärfster Bilddaten durch Bildverarbeitung zu bestimmen.

2. Sensor (10) nach Anspruch 1,
wobei das Lichtlaufzeitmodul (22) in der Abtasteinheit (12) angeordnet ist und einen Lichtsender (26) zum Aussenden von Sendelicht (30) und einen Lichtempfänger (36) zum Empfangen des von Objekten in dem Überwachungsbereich (20) remittiertem Sendelichts (32) aufweist, wobei eine Lichtlaufzeitmesseinheit (38, 48) die Lichtlaufzeit zwischen Aussenden des Sendelichts (30) und Empfangen des remittierten Sendelichts (32) bestimmt.

3. Sensor (10) nach Anspruch 2,
wobei das Lichtlaufzeitmodul (22) mehrstrahlig ausgebildet ist, indem das Sendelicht (30) mehrere voneinander separierte Abtaststrahlen (30, 32) bildet und/oder der Lichtempfänger (36) das remittierte Sendelicht (32) als mehrere voneinander separierte Abtaststrahlen (30, 32) empfängt.

4. Sensor (10) nach Anspruch 2 oder 3,
wobei die Steuer- und Auswertungseinheit (48) dafür ausgebildet ist, Bilddaten des Kameramoduls (24) und Abstandsdaten des Lichtlaufzeitmoduls (22) zu fusionieren.

5. Sensor (10) nach einem der vorhergehenden Ansprüche,
wobei die Steuer- und Auswertungseinheit (48) dafür ausgebildet ist, eine Zeile von Bilddaten abschnittsweise aus jeweils einer von mehreren Empfangszeilen (44₁..44ₘ) auszulesen.

6. Sensor (10) nach Anspruch 3 und 5,
wobei die Steuer- und Auswertungseinheit (48) dafür ausgebildet ist, die jeweilige Empfangszeile (44₁..44ₘ), aus der ein Abschnitt der Zeile von Bilddaten ausgelesen wird, anhand von Abstandsdaten mindestens eines zugeordneten Abtaststrahls (30, 32) auszuwählen.

7. Sensor (10) nach einem der vorhergehenden Ansprüche,
wobei die Steuer- und Auswertungseinheit (48) dafür ausgebildet ist, die Zeile schärfster Bilddaten durch Kontrastbewertung zu bestimmen.

8. Sensor (10) nach einem der vorhergehenden Ansprüche,
wobei der Bildsensor (44) eine Matrixanordnung von Lichtempfangselementen aufweist und die Empfangszeilen (44a-c, 44₁..44ₘ) Teilbereiche der Matrixanordnung sind.

9. Sensor (10) nach einem der vorhergehenden Ansprüche,
wobei der Bildsensor (44) physisch schräggestellt ist.

10. Sensor (10) nach Anspruch 9,
wobei der Bildsensor (44) in einer Scheimpfluganordnung schräggestellt ist.

11. Sensor (10) nach einem der vorhergehenden Ansprüche,
wobei dem Bildsensor (44) ein optisches Element (52) vorgeordnet ist, das für dessen effektives optisches Schrägstehen sorgt.

12. Sensor (10) nach Anspruch 11,
wobei das optische Element (52) als Stufenelement ausgebildet ist.

13. Sensor (10) nach Anspruch 11 oder 12,
wobei das optische Element (52) streifenförmige Bereiche (52a-c) unterschiedlicher Brechungsindices aufweist.

14. Verfahren zur Überwachung eines Überwachungsbereichs (20), bei dem der Überwachungsbereich (20) mittels Abtasteinheit (12) abgetastet wird, in der ein Kameramodul (24) mit einer Empfangsoptik (42) und einem Bildsensor (44) mit mindestens zwei Empfangszeilen (44a-c) von Lichtempfangselementen angeordnet ist, wobei der Bildsensor (44) in Richtung der optischen Achse des Kameramoduls (24) optisch schräg gestellt ist, so dass sich die optischen Weglängen von der Empfangsoptik (42) zu den jeweiligen Empfangszeilen (44a-c) unterscheiden,
**dadurch gekennzeichnet,**
**dass** die Abtasteinheit periodisch um eine Drehachse (18) bewegt wird und dass anhand von Abstandsdaten eines Lichtlaufzeitmoduls (22) eine Empfangszeile (44a-c) ausgewählt wird, deren Bilddaten ausgelesen werden, und/oder eine Zeile schärfster Bilddaten durch Bildverarbeitung bestimmt wird.

## Claims

1. An optoelectronic sensor (10) for monitoring a monitored area (20), comprising a scanning unit (12), a camera module (24) arranged in the scanning unit (12) and having a receiving optics (42) and an image sensor (44) with at least two receiving lines (44a-c) of light-receiving elements, and a control and evaluation unit (48) for reading out image data of the image sensor (44), the image sensor (44) being optically inclined in the direction of the optical axis of the camera module (24) so that the optical path lengths from the receiving optics (42) to the respective receiving lines (44a-c) differ,
**characterized in that** the scanning unit is movable about an axis of rotation (18) for periodically scanning the monitoring area (20), and **in that** the control and evaluation unit (48) is configured to use distance data of a light time-of-flight module (22) to select a receiving line (44a-c) whose image data are read out and/or to determine a line of sharpest image data by image processing.

2. The sensor (10) according to claim 1,
wherein the light time-of-flight module (22) is arranged in the scanning unit (12) and comprises a light transmitter (26) for transmitting transmitted light (30) and a light receiver (36) for receiving the remitted transmitted light (32) remitted by objects in the monitoring area (20), wherein a light time-of-flight measuring unit (38, 48) determines the light time of flight between transmitting the transmitted light (30) and receiving the remitted transmitted light (32).

3. The sensor (10) according to claim 2,
wherein the light time-of-flight module (22) is of multi-beam design in that the transmitted light (30) forms a plurality of mutually separated scanning beams (30, 32) and/or the light receiver (36) receives the remitted transmitted light (32) as a plurality of mutually separated scanning beams (30, 32).

4. The sensor (10) according to claim 2 or 3,
wherein the control and evaluation unit (48) is configured to fuse image data of the camera module (24) and distance data of the time-of-flight module (22).

5. The sensor (10) according to any of the preceding claims,
wherein the control and evaluation unit (48) is configured to read out a line of image data section by section from a respective one of a plurality of receiving lines (44₁.. 44ₘ).

6. The sensor (10) according to claim 3 and 5,
wherein the control and evaluation unit (48) is configured to select the respective receiving line (44₁.. 44ₘ), from which a portion of the line of image data is read out, on the basis of distance data of at least one associated scanning beam (30, 32).

7. The sensor (10) according to any of the preceding claims,
wherein the control and evaluation unit (48) is configured to determine the line of sharpest image data by contrast evaluation.

8. The sensor (10) according to any of the preceding claims,
wherein the image sensor (44) comprises a matrix array of light receiving elements and the receiving lines (44a-c, 44₁.. 44ₘ) are sub-regions of the matrix array.

9. The sensor (10) according to any of the preceding claims,
wherein the image sensor (44) is physically inclined.

10. The sensor (10) according to claim 9,
wherein the image sensor (44) is inclined in a Scheimpflug configuration.

11. The sensor (10) according to any of the preceding claims,
wherein an optical element (52) is arranged in front of the image sensor (44) that provides for its effective optical inclination.

12. The sensor (10) according to claim 11,
wherein the optical element (52) is formed as a step element.

13. The sensor (10) according to claim 11 or 12,
wherein the optical element (52) has stripe-shaped regions (52a-c) of different refractive indices.

14. A method for monitoring a monitored area (20), wherein the monitored area (20) is scanned by means of a scanning unit (12) in which a camera module (24) with a receiving optical system (42) and an image sensor (44) with at least two receiving lines (44a-c) of light-receiving elements is arranged, the image sensor (44) being optically inclined in the direction of the optical axis of the camera module (24) so that the optical path lengths from the receiving optics (42) to the respective receiving lines (44a-c) differ,
**characterized in that** the scanning unit is periodically moved about an axis of rotation (18), and **in that** a receiving line (44a-c) whose image data are read out is selected on the basis of distance data of a light time-of-flight module (22), and/or a line of sharpest image data is determined by image processing.

## Revendications

1. Capteur optoélectronique (10) pour surveiller une zone à surveiller (20), comprenant une unité de balayage (12), un module de caméra (24) disposé dans l'unité de balayage (12) et pourvu d'une optique de réception (42) et d'un capteur d'images (44) ayant au moins deux lignes de réception (44a-c) d'éléments récepteurs de lumière, et une unité de commande et d'évaluation (48) pour lire des données d'image du capteur d'images (44), le capteur d'images (44) étant optiquement mis en oblique dans la direction de l'axe optique du module de caméra (24) de sorte que les longueurs du chemin optique depuis l'optique de réception (42) jusqu'aux lignes de réception respectives (44a-c) se distinguent,
**caractérisé en ce que**
l'unité de balayage est mobile autour d'un axe de rotation (18) pour balayer périodiquement la zone à surveiller (20), et **en ce que** l'unité de commande et d'évaluation (48) est réalisée pour sélectionner, sur la base des données de distance d'un module de temps de vol (22), une ligne de réception (44a-c) dont les données d'image sont lues, et/ou pour déterminer par traitement d'image une ligne ayant les données d'image les plus nettes.

2. Capteur (10) selon la revendication 1,
dans lequel le module de temps de vol (22) est disposé dans l'unité de balayage (12) et comprend un émetteur de lumière (26) pour émettre une lumière d'émission (30) et un récepteur de lumière (36) pour recevoir la lumière d'émission (32) renvoyée par des objets dans la zone à surveiller (20), une unité de mesure du temps de vol (38, 48) déterminant le temps de vol entre l'émission de la lumière d'émission (30) et la réception de la lumière d'émission renvoyée (32).

3. Capteur (10) selon la revendication 2,
dans lequel le module de temps de vol (22) est de conception multifais-ceaux du fait que la lumière d'émission (30) forme plusieurs faisceaux de balayage mutuellement séparés (30, 32) et/ou du fait que le récepteur de lumière (36) reçoit la lumière d'émission renvoyée (32) sous forme de plusieurs faisceaux de balayage mutuellement séparés (30, 32).

4. Capteur (10) selon la revendication 2 ou 3,
dans lequel l'unité de commande et d'évaluation (48) est réalisée pour fusionner les données d'image du module de caméra (24) et les données de distance du module de temps de vol (22).

5. Capteur (10) selon l'une des revendications précédentes,
dans lequel l'unité de commande et d'évaluation (48) est réalisée pour lire une ligne de données d'image section par section à partir d'une ligne respective parmi plusieurs lignes de réception (44₁ .. 44ₘ).

6. Capteur (10) selon les revendications 3 et 5,
dans lequel l'unité de commande et d'évaluation (48) est réalisée pour sélectionner la ligne de réception respective (44₁ .. 44ₘ) parmi laquelle une section de la ligne de données d'image est lue, sur la base de données de distance d'au moins un faisceau de balayage associé (30, 32).

7. Capteur (10) selon l'une des revendications précédentes,
dans lequel l'unité de commande et d'évaluation (48) est réalisée pour déterminer par évaluation du contraste la ligne ayant les données d'image les plus nettes.

8. Capteur (10) selon l'une des revendications précédentes,
dans lequel le capteur d'images (44) comprend un agencement matriciel d'éléments récepteurs de lumière, et les lignes de réception (44a-c, 44₁ .. 44ₘ) sont des zones partielles de l'agencement matriciel.

9. Capteur (10) selon l'une des revendications précédentes,
dans lequel le capteur d'images (44) est physiquement mis en oblique.

10. Capteur (10) selon la revendication 9,
dans lequel le capteur d'images (44) est mis en oblique selon un agencement de Scheimpflug.

11. Capteur (10) selon l'une des revendications précédentes,
dans lequel le capteur d'images (44) est précédé d'un élément optique (52) qui assure sa mise en oblique optique effective.

12. Capteur (10) selon la revendication 11,
dans lequel l'élément optique (52) est réalisé sous la forme d'un élément étagé.

13. Capteur (10) selon la revendication 11 ou 12,
dans lequel l'élément optique (52) présente des zones en forme de bandes (52a-c) d'indices de réfraction différents.

14. Procédé de surveillance d'une zone à surveiller (20), dans lequel la zone à surveiller (20) est balayée au moyen d'une unité de balayage (12) dans laquelle est disposé un module de caméra (24) pourvu d'une optique de réception (42) et d'un capteur d'images (44) ayant au moins deux lignes de réception (44a-c) d'éléments récepteurs de lumière, le capteur d'image (44) étant optiquement mis en oblique dans la direction de l'axe optique du module de caméra (24) de sorte que les longueurs du chemin optique depuis l'optique de réception (42) jusqu'aux lignes de réception respectives (44a-c) se distinguent,
**caractérisé en ce que**
l'unité de balayage est déplacée périodiquement autour d'un axe de rotation (18), et **en ce que**
sur la base des données de distance d'un module de temps de vol (22), une ligne de réception (44a-c) est sélectionnée dont les données d'image sont lues, et/ou une ligne ayant les données d'image les plus nettes est déterminée par traitement d'image.
